# EUROPEAN PATENT APPLICATION

(11) **EP 4 790 976 A1**
(43) Date of publication of application: **12.08.2026**
(21) Application number: 24874539.0
(22) Date of filing: 26.09.2024
(51) Int. Cl.: H04N 1/387, G06V 30/14

(54) **IMAGE PROCESSING DEVICE**

(30) Priority: 05.10.2023 JP 2023173905; 05.10.2023 JP 2023173906
(71) Applicant: KYOCERA Document Solutions Inc., Osaka-shi, Osaka 540-8585 (JP)
(72) Inventor: SATO, Koji, Osaka-shi, Osaka 540-8585 (JP); TANAKA, Kazunori, Osaka-shi, Osaka 540-8585 (JP); HAYASHI, Issei, Osaka-shi, Osaka 540-8585 (JP); TAJIMA, Shinichi, Osaka-shi, Osaka 540-8585 (JP); OKUI, Ryota, Osaka-shi, Osaka 540-8585 (JP); MURASHIMA, Takanori, Osaka-shi, Osaka 540-8585 (JP); OKAZAKI, Yuya, Osaka-shi, Osaka 540-8585 (JP); MIYAJI, Naoya, Osaka-shi, Osaka 540-8585 (JP)
(74) Representative: Winter, Brandl - Partnerschaft mbB
(86) International application number: PCT/JP2024/034358
(87) International publication number: WO 2025/074934

(57) **Abstract**

The additional object detecting unit 12 detects additional objects additionally described to the document, determines an additionally-written command and a process-target-area specifying command included in the detected additional objects, and determines the process-target-area specifying command corresponding to the additionally-written command.

The process executing unit 14 executes a process of a process type corresponding to the determined additionally-written command for a corresponding process target area. Further, the aforementioned process type is a process to (a) extract text information from an image of the process target area, (b) execute image generation corresponding to the extracted text information and thereby acquire a generated image, and (c) insert the generated image to the process target area.

## Description

### Technical Field

The present invention relates to an image processing apparatus.

### Background Art

An automatic coloring device performs coloring of a line drawing on the basis of hint information, and the hint information is information that specifies a color using a dot, a line or the like (see PATENT LITERATURE #1, for example).

### Citation list

### Patent literature

PATENT LITERATURE #1: International Publication 2018/203374.

### Summary of invention

However, the aforementioned automatic coloring device can color an object in a target image, but hardly adds a new image object desired by a user.

The present invention has been conceived in view of the aforementioned problem, and it is an object of the present invention to obtain an image processing apparatus that automatically generates a user-desired new image object and add the new image in a target image.

An image processing apparatus according to the present invention includes: a target image acquiring unit that acquires a document image of a document; an additional object detecting unit that (a) detects additional objects additionally described to the document, (b) determines an additionally-written command and a process-target-area specifying command included in the detected additional objects, and (c) determines the process-target-area specifying command corresponding to the additionally-written command; a process type determining unit that determines a process type corresponding to the detected additionally-written command; and a process executing unit that uses this image processing apparatus or an external server and thereby executes a process of the process type corresponding to the determined additionally-written command for a process target area specified by the process-target-area specifying command corresponding to the additionally-written command. Further, the process type is a process to (a) extract text information from an image of the process target area, (b) execute image generation corresponding to the extracted text information and thereby acquire a generated image, and (c) insert the generated image to the process target area.

### Advantageous effect of invention

By means of the present invention, obtained is an image processing apparatus that automatically generates a user-desired new image object and add the new image in a target image.

These and other objects, features and advantages of the present invention will become more apparent upon reading of the following detailed description along with the accompanied drawings.

### Brief description of drawings

[Fig. 1] Fig. 1 shows a block diagram that indicates a configuration of an image processing apparatus according to an embodiment of the present invention.
[Fig. 2] Fig. 2 shows a diagram that indicates an example of a document and an example of an additionally-written command and an ROI command as additional objects additionally described to the document.
[Fig. 3] Fig. 3 shows a diagram that explains association between a detected additionally-written command and a detected ROI command.
[Fig. 4] Fig. 4 shows a diagram that indicates an example of a document image scanned from a document on which an additionally-written command and an ROI command for an image generation process have been added.
[Fig. 5] Fig. 5 shows a diagram that indicates an example of an image generation process.
[Fig. 6] Fig. 6 shows a diagram that indicates an example of a document image for which an image generation process has been executed.
[Fig. 7] Fig. 7 shows a diagram that indicates a display example of a document image after a generated image is inserted.
[Fig. 8] Fig. 8 shows a flowchart that explains a behavior of the image processing apparatus shown in Fig. 1.
[Fig. 9] Fig. 9 shows a flowchart that explains details of the process execution in Fig. 8.
[Fig. 10] Fig. 10 shows a diagram that indicates an example of a document and an example of an additionally-written command and an ROI command as additional objects additionally described to the document in Embodiment 2.
[Fig. 11] Fig. 11 shows a diagram that indicates an example of an image generation process in Embodiment 2.
[Fig. 12] Fig. 12 shows a diagram that indicates an example of a document image for which an image generation process has been executed in Embodiment 2.

### Description of embodiments

Hereinafter, embodiments according to aspects of the present invention will be explained with reference to a drawing.

### Embodiment 1.

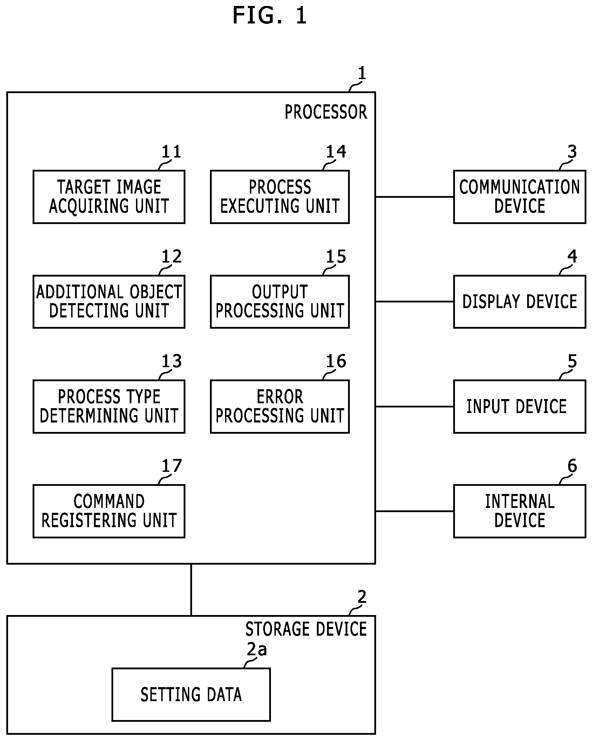

Fig. 1 shows a block diagram that indicates a configuration of an image processing apparatus according to an embodiment of the present invention. An image processing apparatus shown in Fig. 1 is an information processing apparatus such as personal computer, or an electronic apparatus such as digital camera or image forming apparatus (scanner, multi function peripheral or the like), and includes a processor 1, a storage device 2, a communication device 3, a display device 4, an input device 5, an internal device 6 and the like.

The processor 1 includes a computer and executes a program with the computer and thereby, acts as sorts of processing units. Specifically, the computer includes a CPU (Central Processing Unit), a ROM (Read Only Memory), a RAM (Random Access Memory) and the like, loads a program stored in the ROM or the storage device 2, executes the program with the CPU, and thereby acts as sorts of processing units. Further, the processor 1 may include an ASIC (Application Specific Integrated Circuit) that acts as a specific processing unit.

The storage device 2 is a non-volatile storage device such as flash memory, and stores a program and data required for a process mentioned below. In the storage device 2, setting data 2a is stored. The setting data 2a includes a parameter of a learner mentioned below and a relationship between an additionally-written command and a command type, and the like.

The communication device 3 is a device that performs data communication with an external device, such as network interface or a peripheral device interface. The display device 4 is a device that displays sorts of information to a user, such as a display panel of a liquid crystal display. The input device 5 is a device that detects a user operation, such as keyboard or touch panel.

The internal device 6 is a device that performs a specific function of this image processing apparatus. For example, if this image processing apparatus is an image forming apparatus, the internal device 6 includes an image scanning device that optically scans a document image from a document, a printing device that prints an image on a print sheet, and/or the like.

Here, the processor 1 acts as a target image acquiring unit 11, an additional object detecting unit 12, a process type determining unit 13, a process executing unit 14, an output processing unit 15, an error processing unit 16, and a command registering unit 17 as the aforementioned processing units.

The target image acquiring unit 11 acquires a document image (i.e. image data of it) of a document from the storage device 2, the communication device 3, the internal device 6 or the like, and stores the document image into the RAM or the like. For example, this document is a print product outputted by a printing device, and this document image is an image obtained by scanning such document using an image scanning device. For example, this document is a business form.

The additional object detecting unit 12 (a) detects additional objects additionally described to the aforementioned document, (b) determines an additionally-written command and a process-target-area specifying command (ROI commands mentioned below) included in the detected additional objects, and (c) determines the process-target-area specifying command (i.e. a corresponding process target area) corresponding to the additionally-written command.

The additional object detecting unit 12 may detect additional objects additionally described to the aforementioned document in the document image that includes the aforementioned additional objects or may detect additional objects additionally described to the aforementioned document in a difference image between the document image that includes the aforementioned additional objects and an original document image that does not include the aforementioned additional objects. Further, if an original document image is a monochrome image and additional objects are added by handwriting with a color writing tool such as a pen, the additional objects may be detected by extracting parts with a writing color (chromatic color) of the writing tool from the document image that includes the aforementioned additional objects. For example, the writing color is specified as coordinate values with an HSV color space, and is registered in advance.

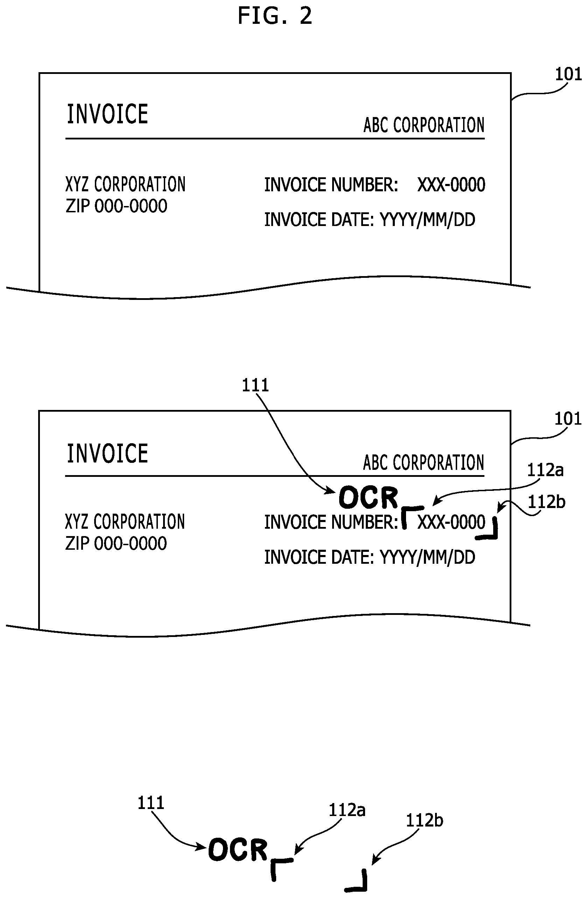

Fig. 2 shows a diagram that indicates an example of a document and an example of an additionally-written command and an ROI command as additional objects additionally described to the document. For example, an additionally-written command 111 and ROI commands 112a and 112b are additionally written to a document 101 as shown in Fig. 2. For example, this additional writing is performed by handwriting with a writing tool such as marker of a predetermined color. The ROI commands 112a and 112b are process-target-area specifying commands. The additionally-written command 111 shown in Fig. 2 is "OCR" as characters. Further, the ROI commands 112a and 112b shown in Fig. 2 are a pair of square brackets, and specify a process target area for a process specified by the additionally-written command 111.

Here, the additionally-written command is image information rather than character information, and image information of at least one of character, symbol and figure. Further, the process-target-area specifying commands are also image information, and are image information of at least one of character, symbol and figure.

Thus, for extracting the additionally-written command, an OCR process is not executed for the additional objects detected by the additional object detecting unit 12, and the additional objects are directly classified into the additionally-written command on the basis of image information (image characteristic amount) of the additional objects.

The additional object detecting unit 12 may classify the detected additional objects into the additionally-written command and the process-target-area specifying command by object detection using a learner that machine learning has been performed. This learner is a deep-learning neural network built in this image processing apparatus or the like, and for example, machine learning has been performed for the learner in accordance with an existing machine learning method such that additional objects of each document image are used as input data and classification (command IDs) of additionally-written commands and ROI commands are used as output data. In a case that the additionally-written command is recognized using object detection, even if there is a small error such as misspelling when a user writes the additionally-written command to a document, for example, the additionally-written command intended by the user tends to be recognized without referring to a dictionary or the like, and the additionally-written command intended by the user is recognized quickly and correctly.

Further, the process-target-area specifying command includes a pair of a first command (ROI command 112a) and a second command (ROI command 112b) different from each other. The process target area is a bounding box of the first command (ROI command 112a) and the second command (ROI command 112b) as a pair. Here, the first command (ROI command 112a) is an opening bracket and the second command (ROI command 112b) is a closing bracket.

In the detection of the aforementioned additional objects, bounding boxes (circumscribed rectangles) 121, 122a and 122b of the additional objects are detected; and in the determination of the aforementioned process type, an additional object that has a specific image characteristic is recognized as the additionally-written command 111, and additional objects that have specific image characteristics are recognized as the ROI commands 112a and 112b (a pair of an image that indicates a top left corner of a process target area and an image that indicates a bottom right corner of the process target area).

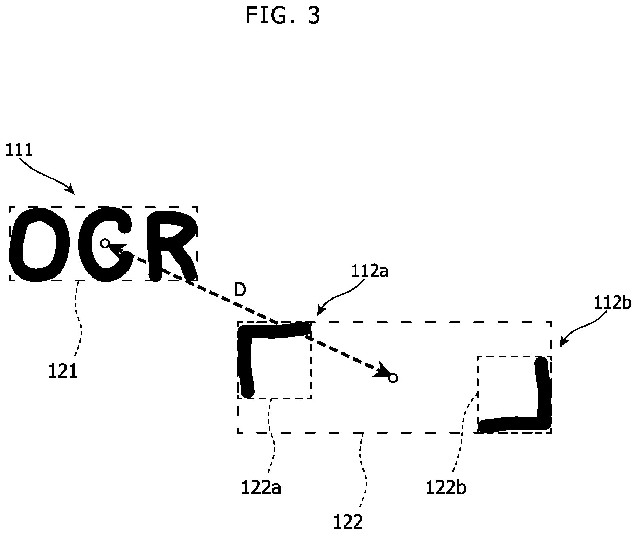

Fig. 3 shows a diagram that explains association between a detected additionally-written command and a detected ROI command. Further, as shown in Fig. 3 for example, the bounding box 122 of the ROI commands 112a and 112b is set as a process target area, and the additionally-written command 111 and the process target area are associated with each other on the basis of a distance D between a centroid position of the bounding box 122 (process target area) and a centroid position of the bounding box 121 of the additionally-written command 111. Therefore, a process specified by the additionally-written command 111 is executed for this process target area. For example, if the distance D is equal to or less than a predetermined value, then the additionally-written command 111 and the process target area may be associated with each other. If there are plural process target areas and plural additionally-written commands, regarding an additionally-written command, a process target area (process-target-area specifying commands) that has the shortest distance between a center position of this additionally-written command (a center position of a bounding box of this additionally-written command) and a center position of this process target area is determined as a process target area (process-target-area specifying commands) corresponding to this additionally-written command.

Returning to Fig. 1, the process type determining unit 13 determines a process type corresponding to the determined additionally-written command among predetermined plural process types. For example, in advance, a process ID that indicates a process type is associated with a command ID of an additionally-written command and is registered, the process type determining unit 13 determines a process type of a process ID corresponding to a command ID of the detected additionally-written command, as a process type corresponding to the additionally-written command.

In this embodiment, plural process types that can be specified by plural additionally-written commands different from each other are set in the setting data 2a.

The plural process types include Image generation process. The image generation process is a process to (a) extract text information from an image of the process target area, (b) execute image generation corresponding to the extracted text information and thereby acquire a generated image, and (c) insert the generated image to the process target area.

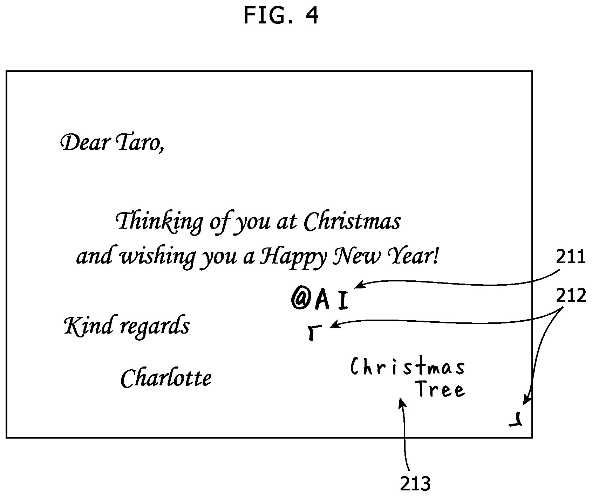

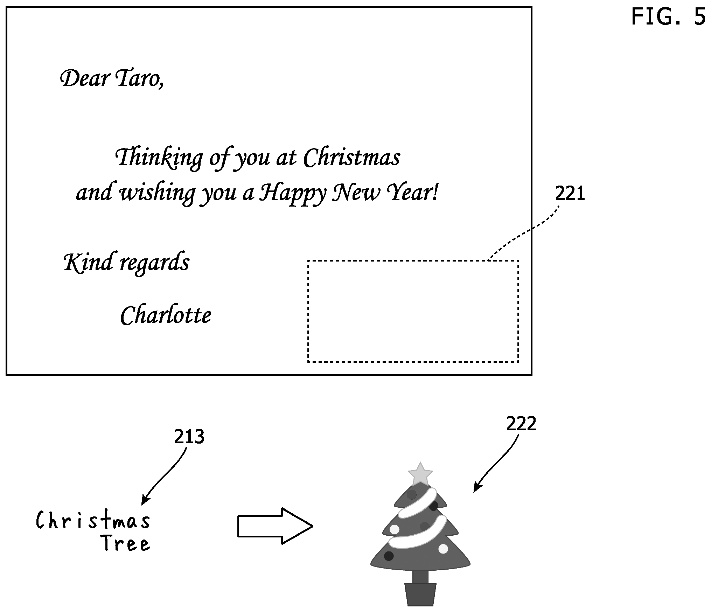

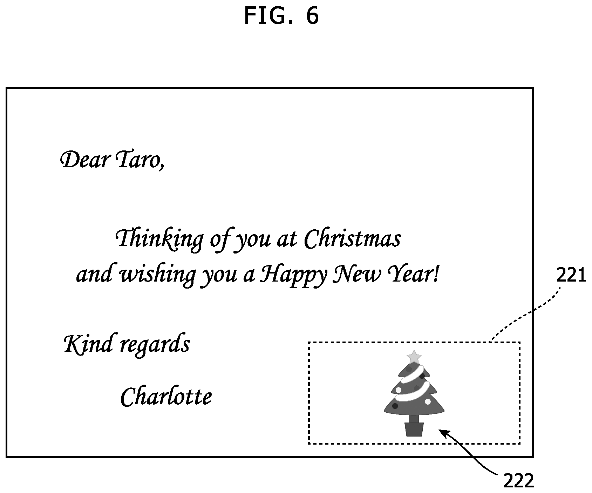

Fig. 4 shows a diagram that indicates an example of a document image scanned from a document on which an additionally-written command and an ROI command for an image generation process have been added. Fig. 5 shows a diagram that indicates an example of an image generation process. Fig. 6 shows a diagram that indicates an example of a document image for which an image generation process has been executed.

In this embodiment, there is an additionally-written command "@AI" as an additionally-written command corresponding to the Image generation process. As shown in Fig. 4 for example, an additionally-written command 211 and an ROI command 212 are added, and further, hint information 213 is added in a process target area specified by the ROI command 212. Here, in the image generation process, as shown in Fig. 5 for example, (a) the hint information 213 is extracted as text information (character code array) by executing an OCR process for an image of the process target area, (b) a generated image 222 is generated by executing image generation corresponding to the extracted text information using a learner for which machine learning has been performed with a diffusion model or the like, (c) the additionally-written command 211, the ROI command 212 and the hint information 213 are deleted, for example, by filling with a background color, and (d) the generated image 222 is inserted to the process target area 221 (after zooming of the generated image if required) as shown in Fig. 6, for example.

Here, the hint information 213 is text information described by handwriting, and is a word or text that indicates an object in the generated image. For example, the hint information 213 shown in Fig. 4 is text information that indicates a Christmas tree.

Further, the aforementioned plural process types include image insertion, character information extraction, structured data generation and the like.

For example, in the process type "image insertion" corresponding to the additionally-written command "ERASE", executed is a process to overwrite a process target area with a background color (i.e. deletion of an object in a process target area). For example, in the process type "image insertion" corresponding to the additionally-written command "MASK", executed is a process to overwrite a process target area with a specific color (black or the like) (i.e. mask process). For example, in the process type "image insertion" corresponding to the additionally-written command "STAMP", executed is a process to fit to a process target area a specific image (image of a stamp) specified in advance for the process target area.

Further, for example, in the process type "character information extraction" corresponding to the additionally-written command "OCR", an OCR process for a printed character is executed for an image of a process target area. Furthermore, for example, in the process type "character information extraction" corresponding to the additionally-written command "FILENAME", executed is a process to set as a file name character information (text data) obtained in an OCR process for an image of a process target area and save image data of a document with the file name. Furthermore, a process of the process type TAG is a process to generate a string (character information) included in a process target area using an OCR process and set the character information as a searching tag when a document image is data in a PDF format.

Furthermore, in the process type "structured data generation process" corresponding to the additionally-written command "TABLE", executed is a process to generate structured data (data in a table format) from an image of a process target area.

Returning to Fig. 1, the process executing unit 14 uses this image processing apparatus or an external server and thereby executes a process of the process type corresponding to the determined additionally-written command (command ID) for a process target area specified by the process-target-area specifying command corresponding to this additionally-written command. If this process is executed using an external server, the process executing unit 14 transmits a process request and data required for the process to the external server using the communication device 3, and receives a process result from the external server using the communication device 3.

When the aforementioned image generation process is executed, the process executing unit 14 specifies a parameter to a learner for which machine learning has been performed and executes image generation using the learner. This parameter is a parameter that specifies a style of the generated image (handwritten style, live-action style or the like), and may be specified in advance as a user setting or may be determined in accordance with a user operation to the input device 5.

In this embodiment, the process executing unit 14 selects on the basis of the determined process type either to execute the process using this image processing apparatus or to execute the process using the external server. Specifically, for a predetermined high-load process, the process executing unit 14 causes the external server to execute the process; and for a predetermined low-load process, the process executing unit 14 executes the process with this image processing apparatus without using the external server.

Further, the output processing unit 15 performs outputting the aforementioned processed document image (printing, data transmission or the like), outputting the data obtained by the aforementioned process, displaying a result of the aforementioned process on the display device 4 or the like.

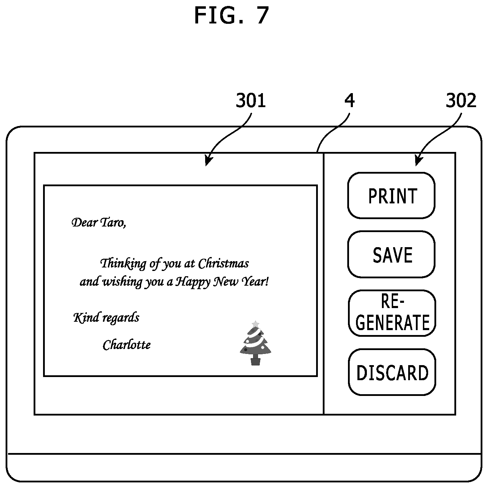

Fig. 7 shows a diagram that indicates a display example of a document image after a generated image is inserted. As shown in Fig. 7 for example, the output processing unit 15 displays a document image 301 after inserting the generated image on the display device 4, and further, displays an operation menu 302 with the document image 301. The operation menu 302 is a menu that enables to select as items (a) printing the document image after inserting the generated image, (b) data output of the document image after inserting the generated image, (c) discarding the document image after inserting the generated image, and re-generating the generated image. Each of the items in the operation menu 302 is displayed as a soft key, and a process (the printing, the data output, the discarding, the re-generating or the like) corresponding to the soft key pressed down by a user is executed. Specifically, when the soft key in the operation menu 302 is pressed down, the output processing unit 15 determines a process corresponding to the pressed-down soft key and causes the process executing unit 14 to execute the determined process.

Further, if an error occurs in the aforementioned detection of the additional objects and the determination of the process type, then the error processing unit 16 determines a cause and/or an error type of the error and displays the cause and/or the error type on the display device 4. The command registering unit 17 performs registration of a user-desired additionally-written command and the like.

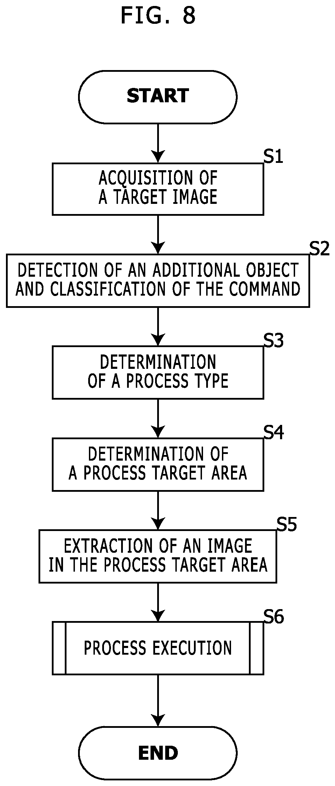

The following part explains a behavior of the image processing apparatus in Fig. 1. Fig. 8 shows a flowchart that explains a behavior of the image processing apparatus shown in Fig. 1.

When the target image acquiring unit 11 acquires a document image (an additionally-written command, an ROI command and the like have been described) (in Step S1); and the additional object detecting unit 12 detects additional objects additionally described on the aforementioned document and determines an additionally-written command and an ROI command from the detected additional objects (in Step S2).

When the additionally-written command is determined, the process type determining unit 13 determines a process type and a process to be executed corresponding to the additionally-written command (in Step S3).

Subsequently, for each of the determined additionally-written commands, the process executing unit 14 determines a process target area (a position and a size of it) specified by the ROI command (in Step S4), extracts an image of the determined process target area from the document image (in Step S5), and executes the determined process for the document image (in Step S6). After finishing the process, the output processing unit 15 performs displaying the process result on the display device 4 and performs an output process (printing, data transmission, data saving or the like) of the processed document image or generated data.

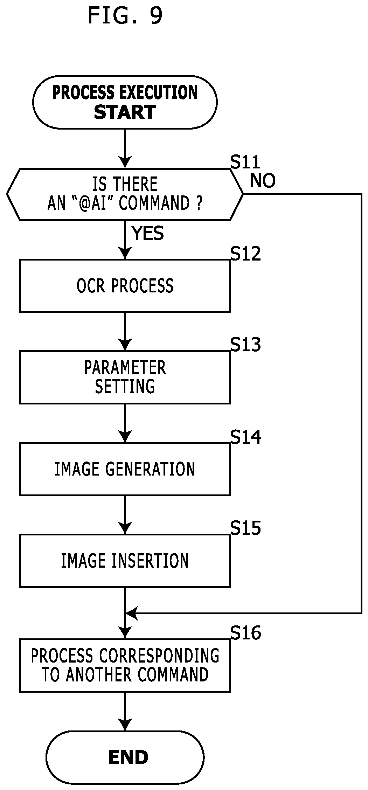

Here, details of the process execution in Step S6 are explained. Fig. 9 shows a flowchart that explains details of the process execution in Fig. 8.

The process executing unit 14 determines whether there is an additionally-written command "@AI" or not among the additionally-written commands determined in the document image (in Step S11).

If there is an additionally-written command "@AI", the process executing unit 14 executes an OCR process for an image of a process target area corresponding to the additionally-written command "@AI" and thereby extracts hint information as text information (in Step S12).

Subsequently, the process executing unit 14 sets a parameter of a diffusion model (in Step S13), and executes image generation with the diffusion model (in Step S14), and inserts the obtained generated image to the process target area (in Step S15).

Afterward, if there is another additionally-written command determined in the document image, the process executing unit 14 executes a process corresponding to this additionally-written command (in Step S16).

As mentioned, on the basis of the additionally-written command "@AI", executed is the image generation based on the hint information described in the process target area specified by the ROI command in the document image, and the newly-generated image is added into the process target area.

As mentioned, in the aforementioned Embodiment 1, the target image acquiring unit 11 acquires a document image of a document. The additional object detecting unit 12 (a) detects additional objects additionally described to the document, (b) determines an additionally-written command and a process-target-area specifying command included in the detected additional objects, and (c) determines the process-target-area specifying command corresponding to the additionally-written command. The process type determining unit 13 determines a process type corresponding to the detected additionally-written command. The process executing unit 14 uses this image processing apparatus or an external server and thereby executes a process of the process type corresponding to the determined additionally-written command for a process target area specified by the process-target-area specifying command corresponding to the additionally-written command. Further, the aforementioned process type is image generation process, and the image generation process is a process to (a) extract text information from an image of the process target area, (b) execute image generation corresponding to the extracted text information and thereby acquire a generated image, and (c) insert the generated image to the process target area.

Consequently, a user-desired new image object is automatically generated and added in a target image.

### Embodiment 2.

In Embodiment 2, the aforementioned process type is a process to (a) extract text information from an image of the process target area, (b) execute image generation corresponding to the extracted text information and an image object in the process target area and thereby acquire a generated image, and (c) insert the generated image to the process target area. More specifically, the process type is a process to (a) extract text information from an image of a first process target area among the process target areas, (b) execute image generation corresponding to the extracted text information and an image object in a second process target area among the process target areas and thereby acquire a generated image, and (c) insert the generated image to the second process target area.

Further, the image object in the second process target area is a schematic diagram that indicates a composition of the aforementioned generated image, and for example, is added to the document by handwriting.

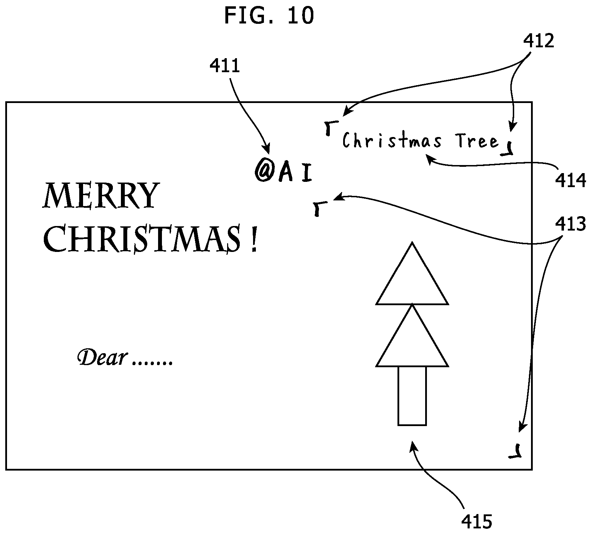

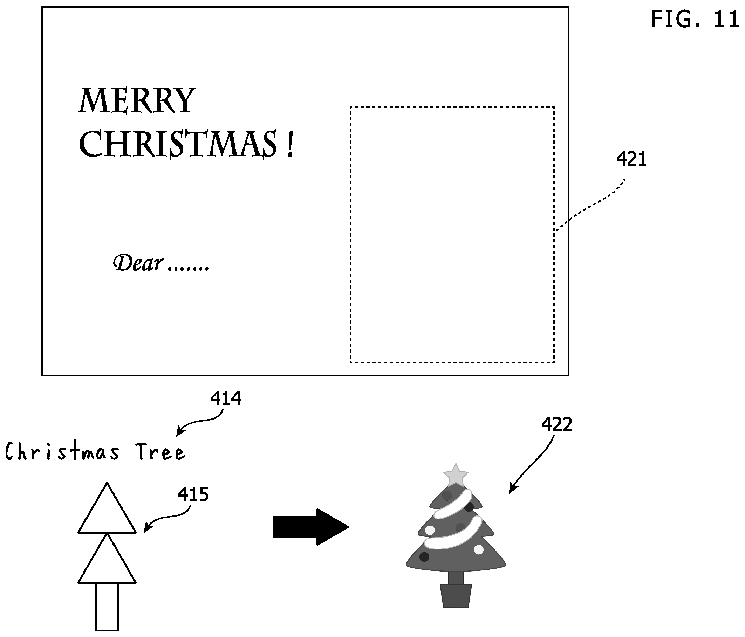

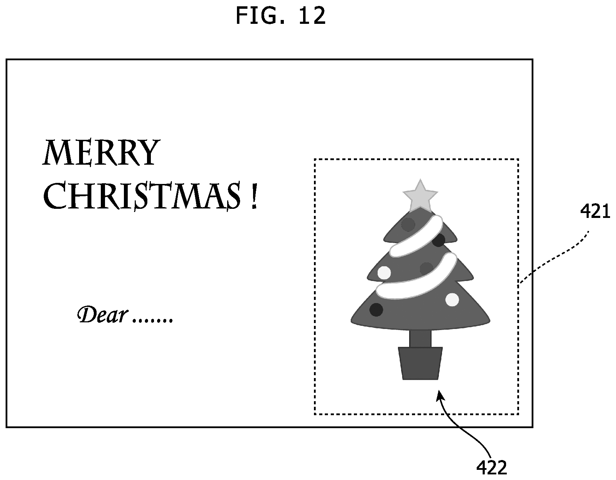

Fig. 10 shows a diagram that indicates an example of a document and an example of an additionally-written command and an ROI command as additional objects additionally described to the document in Embodiment 2. Fig. 11 shows a diagram that indicates an example of an image generation process in Embodiment 2. Fig. 12 shows a diagram that indicates an example of a document image for which an image generation process has been executed in Embodiment 2.

In Embodiment 2, there is the additionally-written command "@AI" corresponding to the image generation process as well as in Embodiment 1. As shown in Fig. 10 for example, an additionally-written command 411, an ROI command 412 that specifies a first process target area, and an ROI command 413 that specifies a second process target area are added (by handwriting), and further, first hint information 414 is added in the first process target area specified by the ROI command 412 and second hint information 415 is added (here, by handwriting) in the second process target area specified by the ROI command 413.

It should be noted that the ROI command 412 that specifies the first process target area and the ROI command 413 that specifies the second process target area may have the same shapes as each other or may have different shapes from each other.

Further, if the ROI commands 412 and 413 have different shapes from each other, then in accordance with the shapes, the ROI commands 412 and 413 may be classified into an ROI command that specifies the first process target area and an ROI command that specifies the second process target area.

Furthermore, among the ROI commands 412 and 413, an ROI command that includes text information in the process target area may be detected as an ROI command that specifies the first process target area, and an ROI command that includes an image object such as figure or picture in the process target area may be detected as an ROI command that specifies the second process target area.

Furthermore, among the ROI commands 412 and 413, an ROI command located at a position higher than the additionally-written command 411 may be detected as an ROI command that specifies the first process target area, and an ROI command located at a position lower than the additionally-written command 411 may be detected as an ROI command that specifies the second process target area.

Here, in the image generation process, as shown in Fig. 11 for example, (a) the first hint information 414 is extracted as text information (character code array) by executing an OCR process for an image of the first process target area, (b) a generated image 422 is generated by executing image generation corresponding to the extracted text information and the second hint information 415 (the image object in the second process target area) using a learner for which machine learning has been performed with a diffusion model or the like, (c) the additionally-written command 411, the ROI command 412, the ROI command 413 and the hint information 414 and 415 are deleted, for example, by filling with a background color, and (d) the generated image 422 is inserted to the second process target area 421 (after zooming of the generated image if required) as shown in Fig. 12, for example.

Here, the first hint information 414 is text information described by handwriting, and is a word or text that indicates an object in the generated image. Further, the second hint information 415 (i.e. the image object in the second process target area) is a schematic diagram that indicates a composition of the aforementioned generated image. For example, as shown in Fig. 10, the hint information 414 is text information that indicates a Christmas tree, and the hint information 415 is a schematic diagram that indicates the number of Christmas trees. For the aforementioned learner, machine learning has been performed such that such text information and such schematic diagrams are used as input data.

The following part explains a behavior of the image processing apparatus in Embodiment 2.

In Embodiment 2, if there is an additionally-written command "@AI" among the additionally-written commands determined in the document image, the process executing unit 14 executes an OCR process for an image of the first process target area corresponding to the additionally-written command "@AI" and thereby extracts first hint information as text information, and extracts second hint information as an image object from the second process target area corresponding to the additionally-written command "@AI" (in Step S12).

Subsequently, the process executing unit 14 sets a parameter of a diffusion model (in Step S13), and executes image generation with the diffusion model on the basis of the first hint information and the second hint information (in Step S14), and inserts the obtained generated image to the process target area (in Step S15).

Other parts of the configuration and behaviors of the image processing apparatus in Embodiment 2 are identical or similar to those in Embodiment 1, and therefore not explained here.

Further, it should be understood that various changes and modifications to the embodiments described herein will be apparent to those skilled in the art. Such changes and modifications may be made without departing from the spirit and scope of the present subject matter and without diminishing its intended advantages. It is therefore intended that such changes and modifications be covered by the appended claims.

### Industrial applicability

For example, the present invention is applicable to an image processing apparatus that performs a user-desired process for a document image.

## Claims

1. An image processing apparatus, comprising:
a target image acquiring unit that acquires a document image of a document;
an additional object detecting unit that (a) detects additional objects additionally described to the document, (b) determines an additionally-written command and a process-target-area specifying command included in the detected additional objects, and (c) determines the process-target-area specifying command corresponding to the additionally-written command;
a process type determining unit that determines a process type corresponding to the detected additionally-written command; and
a process executing unit that uses this image processing apparatus or an external server and thereby executes a process of the process type corresponding to the determined additionally-written command for a process target area specified by the process-target-area specifying command corresponding to the additionally-written command;
wherein the process type is a process to (a) extract text information from an image of the process target area, (b) execute image generation corresponding to the extracted text information and thereby acquire a generated image, and (c) insert the generated image to the process target area.

2. The image processing apparatus according to claim 1, wherein the image of the process target area includes handwritten hint information;
the process executing unit extracts the handwritten hint information as the text information; and
the hint information is a word or a text that indicates an object in the generated image.

3. The image processing apparatus according to claim 1, wherein the process executing unit specifies a parameter to a learner for which machine learning has been performed and executes the image generation using the learner; and
the parameter specifies a style of the generated image.

4. The image processing apparatus according to claim 1, further comprising an output processing unit;
wherein the output processing unit (a) displays the document image after the generated image is inserted, and (b) displays a menu with the document image after the generated image is inserted, the menu that enables to select printing of the document image after the generated image is inserted, discarding the document image after the generated image is inserted, and re-generating of the generated image.

5. The image processing apparatus according to claim 1, wherein the process type is a process to (a) extract text information from an image of the process target area, (b) execute image generation corresponding to the extracted text information and an image object in the process target area and thereby acquire a generated image, and (c) insert the generated image to the process target area.

6. The image processing apparatus according to claim 5, wherein the process type is a process to (a) extract text information from an image of a first process target area among the process target areas, (b) execute image generation corresponding to the extracted text information and an image object in a second process target area among the process target areas and thereby acquire a generated image, and (c) insert the generated image to the second process target area.

7. The image processing apparatus according to claim 6, wherein the image object is a schematic diagram that indicates a composition of the generated image.
